# EUROPEAN PATENT APPLICATION

(11) **EP 2 226 713 A1**
(43) Date of publication of application: **08.09.2010**
(21) Application number: 09154405.6
(22) Date of filing: 05.03.2009
(51) Int. Cl.: G06F 3/048

(54) **Cooperative drag and drop**

(71) Applicant: Telefonaktiebolaget LM Ericsson (publ), 164 83 Stockholm (SE)
(72) Inventor: Persson, Per, 247 34, Södra Sandby (SE); Krigström, Anders, 211 25, Malmö (SE)
(74) Representative: Andersson, Björn E.

(57) **Abstract**

A method for communicating a data object between sending and receiving portable electronic devices (200', 200) is disclosed. Both devices have graphical user interfaces including display means having respective display areas. The method involves detecting (420') a drag action of a drag-and-drop operation being performed in a border region (240') of the display area (250') of the sending device (200'); communicating (422') a command (*AcceptDrag*) over a short-range communication channel between the sending and receiving devices; receiving (420) the command in the receiving device (200); continuing (430) the drag-and-drop operation in the graphical user interface of the receiving device; detecting (440) a drop action of the drag-and-drop operation being performed in the display area (250) of the receiving device; transferring (452') a data object associated with the drag-and-drop operation from the sending device to the receiving device; and receiving (450) the data object in the receiving device. A portable electronic device capable of acting as the receiving device in the method is also disclosed.

## Description

### Technical Field

The present invention relates to portable electronic devices, and more particularly to the communication of data objects between such devices.

### Background

Portable electronic equipment of course exists in many different types. One common example is a mobile terminal, such as a mobile telephone for a mobile telecommunications system like GSM, UMTS, D-AMPS, CDMA2000, FOMA or TD-SCDMA. Other examples include personal digital assistants (PDA:s), portable media players (e.g. MP3 players), palmtop computers, digital cameras, game consoles, navigators, etc. A mobile terminal in the form of a mobile telephone will be used as a non-limiting example of a portable electronic device in the following.

In the early days of mobile telecommunications, the mobile terminals were used for speech communication only. The situation has of course changed dramatically since then. Nowadays, mobile terminals are also frequently used for professional, personal and recreational services such as calendar, messaging, word processing, spreadsheet calculations, media playback, etc. Hence, the need for sharing of digital information between individual devices has arisen.

When a data object such as a file of digital data is to be shared from one mobile terminal to another, the communication can be performed in various ways. For instance, the data object may be sent as an attachment in a digital message (e.g. email or MMS) to the receiving terminal, or a user of the sending terminal may upload the data object to an external storage, such as an FTP server on the Internet, from which a user of the receiving terminal then may download the data object. Whereas these communication methods are well functioning as such, they do require the involvement of intermediate communication means to complete the transfer of the data object. This may be disadvantageous in terms of accessibility and transfer delay.

Therefore, when direct communication between sending and receiving terminals is desired to transfer a data object, a short-range communication interface that many mobile terminals are equipped with can be used. Common examples are Blue-tooth™, WiFi (IEEE 802.11; wireless LAN), Infrared Data Association (IrDA), and galvanic connection over a serial cable interface such as USB. However, several steps of manual intervention are required when a data object is to be transferred over such a short-range communication channel. On the sending device, the user must typically browse a file system to select the data object, then select a send menu item, specify the desired communication channel, wait until the communication channel has been setup, then specify the receiving device, and finally await transfer of the data object. On the receiving device, the user must typically confirm that the requested transfer is allowable. Also, since the transferred data object is typically received in a certain predetermined download folder in the local file system on the receiving device, additional user intervention is required in order to process the received data object further (such as opening the data object in an end-user application, or moving it to a desired storage location in the receiving device).

US-2007/0264976 discloses a method for transferring data objects from a sending mobile terminal to a receiving mobile terminal. The two devices establish connection over a short-range communication interface known as Near Field Communication (NFC), and the user uses a graphical user interface of the sending mobile terminal to select and drag a desired data object in a given direction towards an edge of the display screen. The feature in US-2007/0264976 is that the sending mobile terminal is modified to handle such a select-and-drag action by initiating an automatic transfer of the data object to the receiving mobile terminal over the NFC interface. On the receiving side, however, no modifications have been made. The transferred data object will therefore be received in the conventional manner; the user of the receiving mobile terminal must typically confirm that the requested transfer is allowable, the transferred data object will typically be received in a certain predetermined download folder, and additional user intervention is required in order to process the received data object further.

Therefore, there is room for improvements with respect to these problems, particularly when it comes to reducing the number of manual intervention steps required for communicating a data object to a portable electronic device from another portable electronic device, and making the procedure more flexible and intuitive to the user.

### Summary

It is accordingly an object of the invention to eliminate or alleviate at least some of the problems referred to above.

As a conceptual idea behind the invention, the present inventors have realized that the graphical user interface of a portable electronic device should be made cooperative with the graphical user interface of another portable electronic device, in a way such that the sending and receiving devices will cooperate to provide drag-and-drop handover functionality to a user.

This conceptual idea has been reduced to practice at least according to the aspects and embodiments of the invention referred to below.

One aspect of the present invention therefore is a portable electronic device comprising:
a communication interface for establishing a short-range communication channel with another portable electronic device located nearby;
a graphical user interface including display means, input means, and drag-and-drop functionality for moving data objects in the graphical user interface; and
a controller coupled to the communication interface and to the graphical user interface, wherein the controller is configured to receive a command from said another portable electronic device via the communication interface, to identify the command as a drag-and-drop operation initiated at said another device, and to control said graphical user interface to continue the drag-and-drop operation.

This portable electronic device is also referred to as "receiving device" in the remainder of this document, whereas aforesaid another portable electronic device located nearby is also referred to as "sending device".

The graphical user interface is typically configured to continue the drag-and-drop operation by detecting a user's navigational actuation of the input means, and visually reproducing the navigational actuation in a display area of the display means to represent the continued drag-and-drop operation. Thus, according to the invention, the graphical user interfaces of the sending and receiving devices will cooperate to provide drag-and-drop handover functionality to the user, so that the user may start the drag action of the drag-and-drop operation in the graphical user interface of the sending device and continue with the drag action of the drag-and-drop operation in the graphical user interface of the receiving device. Since the continued drag-and-drop operation is fully controlled by the receiving device after hand-over, the user may complete the drag action along any geometrical line or curve in the display area as he desires; he is not limited to the direction and form that he applied at the sending device for the initial drag action of the drag-and-drop operation. This is very advantageous, since it will allow the user to accurately control where the drag-and-drop operation will end (i.e. the destination location of the drop action of the drag-and-drop operation), which in turn will affect the outcome of the drag-and-drop operation at the receiving device. Advantageously, the display means and the input means are jointly realized by a touch-sensitive display.

In one or more embodiments, the graphical user interface is configured to begin the visual representation in a border region of said display area of said display means. Advantageously, the border region is at an edge of said display means facing said another device, with said communication interface also being located at this edge. This arrangement is particularly intuitive to the user.

Advantageously, the portable electronic device further comprises one or more additional short-range communication interfaces at one or more other edges of the display means. This allows more freedom for the relative position and orientation of the sending and receiving devices, and represents a flexible way of creating a larger work area for the drag-and-drop functionality, extending over the combined display areas of the sending and receiving devices.

The controller may be configured to receive, from said another device, positional information representing at least an end location of the drag-and-drop operation at said another device, and to control said graphical user interface such that the location of said border region within the display area of said display means depends on said positional information. This positional information may define the coordinates within the display area of the sending device where the drag-and-drop operation ended, possibly supplemented by vector information representing the direction of the drag-and-drop operation as it ended at said another device. Transferring such positional information to the receiving device is beneficial, since it will allow the drag-and-drop operation to be visually continued at the receiving device at an intuitive position in its graphical user interface. Advantageously, the border region of the receiving device will be positioned such that it is centered around an extrapolated position from the end location of the drag-and-drop operation at the sending device (i.e. making use of the vector information mentioned above), thereby facilitating for the user to continue his drag action in the direction he used for the initial part of his drag action at the sending device.

Additionally or alternatively, the controller may be configured to receive, from said another device, image information representing a graphical symbol used for the drag-and-drop operation initiated at said another device, and to control said graphical user interface to use the graphical symbol for the visual representation of the continued drag-and-drop operation. Transferring such image information to the receiving device is beneficial, since it will allow the drag-and-drop operation to be visually continued in an intuitive way for the user, by using the same graphical symbol (e.g. icon) for the continued drag-and-drop operation, as was initially used at the sending device.

Advantageously, the positional information and/or the image information may be derived by the controller from information sent together with or included in said command (for instance as parameter data in said command).

The portable electronic device may further comprise a data object storage, wherein the controller is configured to detect that the user stops actuating the input device, accept this as the drop action of the drag-and-drop operation, and control said data object storage to store a data object to which said drag-and-drop operation pertains.

Also, the portable electronic device may further comprise at least one end-user application, wherein the controller is configured to detect that the user stops actuating the input device, accept this as the drop action of the drag-and-drop operation, and forward to the end-user application a data object to which said drag-and-drop operation pertains.

In response to having detected the drop action of the drag-and-drop operation, the controller may be configured to send a request for said data object to said another device via said communication interface, and to receive the requested data object from said another device. In this way, the user may use the drag-and-drop handover functionality to copy a selected file object from a source location in a file system at the sending device to a destination location in a file system at the receiving device. The copied file object may contain digital data of various formats such as character or binary encoded, representing various types of media such as audio, video, image and text. Additionally or alternatively, the user may mark an object or a set of data (such as a sequence of text) in a first end-user application at the sending device and copy the marked object or set of data to a second end-user application at the receiving device - for instance to be copied into a text-receiving window, form or input field in the second end-user application.

The portable electronic device may be configured to receive the requested data object from said another device over said communication interface. In some embodiments, the communication interface for establishing the communication channel between the sending and receiving devices is selected from the group consisting of Near Field Communication (NFC), Bluetooth™, WiFi (IEEE 802.11; wireless LAN), Infrared Data Association (IrDA), and galvanic connection.

In one embodiment, the portable electronic device is configured to receive the requested data object from said another device over another communication interface than said communication interface. For this embodiment, said communication interface is an interface for Near Field Communication (NFC) or a galvanic interface, wherein said another communication interface is an interface for short-range supplemental data interchange, preferably Bluetooth™ or WiFi.

A second aspect of the invention is a method for communicating a data object between sending and receiving portable electronic devices, both devices having graphical user interfaces including display means having respective display areas, the method involving:
detecting a drag action of a drag-and-drop operation being performed in a border region of the display area of the sending device;
communicating a command over a short-range communication channel between the sending and receiving devices;
receiving the command in the receiving device;
continuing the drag-and-drop operation in the graphical user interface of the receiving device;
detecting a drop action of the drag-and-drop operation being performed in the display area of the receiving device;
transferring a data object associated with the drag-and-drop operation from the sending device to the receiving device; and
receiving the data object in the receiving device.

In one or more embodiments, prior to the detecting of a drag action, the short-range communication channel is established between the sending and receiving devices and involves negotiation regarding one or more of the following:
file types acceptable for drag-and-drop operations between the devices,
the size and/or location of said border region of the display area of the sending device, and
the size and/or location of a border region of the display area of the receiving device to be used for said continuing of the drag-and-drop operation.

The communicating of a command over the short-range communication channel between the sending and receiving devices may advantageously involve sending positional information representing at least an end location of the drag-and-drop operation at said sending device, wherein the continuing of the drag-and-drop operation in the graphical user interface of the receiving device is made dependent on this positional information. Additionally or alternatively, the communicating of a command over the short-range communication channel between the sending and receiving devices may involve sending image information representing a graphical symbol used for the drag-and-drop operation at the sending device, wherein the continuing of the drag-and-drop operation in the graphical user interface of the receiving device uses this graphical symbol for the visual representation of the continued drag-and-drop operation. The benefits of such features have already been explained above for the first aspect of the invention.

In one or more embodiments, a request for said data object is sent from the receiving device to the sending device upon the detecting of said drop action, wherein receipt of said request at the sending device causes the transferring of said data object from the sending device to the receiving device.

Advantageously, together with the request for said data object, communication channel information may be sent which indicates a communication channel to be used for the transferring of said data object from the sending device to the receiving device, wherein the indicated communication channel is selected from the group consisting of:
said short-range communication channel, and another communication channel.

Embodiments of the second aspect of the invention may generally have the same or directly corresponding features as any of the features referred to above for the first aspect, and vice versa.

It should be emphasized that the term "comprises/comprising" when used in this specification is taken to specify the presence of stated features, integers, steps, or components, but does not preclude the presence or addition of one or more other features, integers, steps, components, or groups thereof. All terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### Brief Description of the Drawings

Objects, features and advantages of embodiments of the invention will appear from the following detailed description, reference being made to the accompanying drawings, in which:
Fig 1 is a schematic illustration of a non-limiting example of a telecommunication system in which embodiments of the present invention may be exercised;
Figs 2a - 2f schematically illustrate the inventive concept of communicating a data object between a sending and a receiving portable electronic device;
Fig 3 is a schematic block diagram representing an internal software and hardware structure of a receiving portable electronic device according to one embodiment;
Fig 4 is a schematic flowchart diagram of drag-and-drop handover functionality according to one embodiment; and
Figs 5a-5c are schematic block diagrams illustrating chains of events occurring in the receiving portable electronic device when performing the drag-and-drop handover functionality of Fig 4.

### Detailed Description

Embodiments of the invention will now be described with reference to the accompanying drawings. The invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular embodiments illustrated in the accompanying drawings is not intended to be limiting of the invention. In the drawings, like numbers refer to like elements.

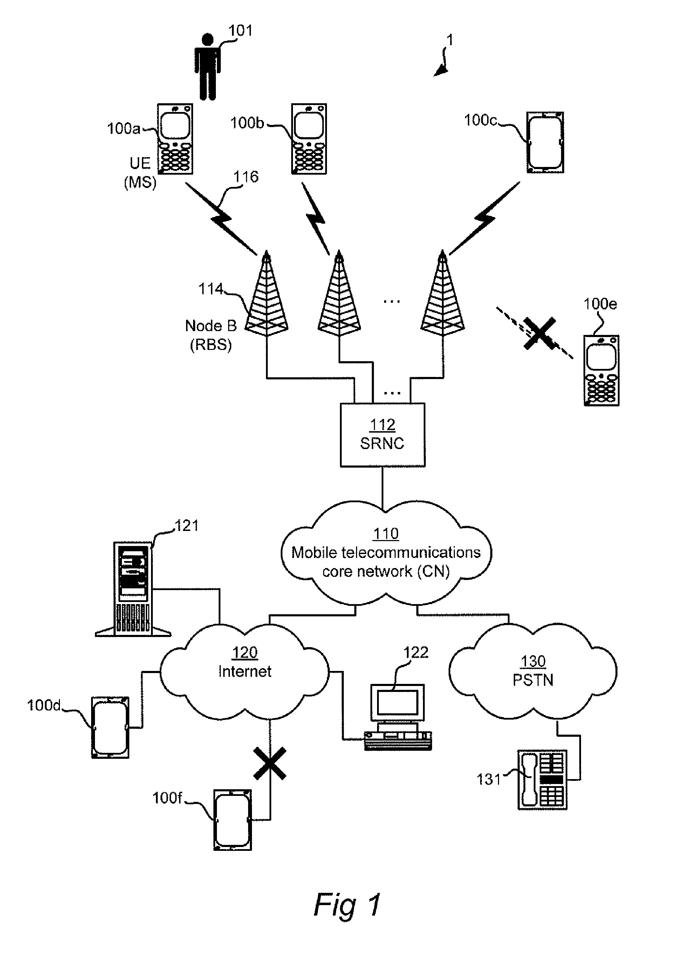

Before turning to a detailed description of the disclosed embodiments, an exemplifying environment in which they may be exercised will now be briefly described with reference to Fig 1.

Fig 1 illustrates a cellular telecommunications system 1 according to the familiar 3G/UMTS system architecture, as defined in the 3GPP standards. Users 101 of user equipment (UE) 100a-c (i.e. mobile terminals) may use different telecommunications services, such as voice calls, Internet browsing, video calls, data calls, facsimile transmissions, still image transmissions, video transmissions, electronic messaging, and e-commerce. An individual UE 100a connects to a mobile telecommunications core network 110 over a radio link 116 to a radio base station (RBS) 114 (also known as Node B), which in turn is connected to a serving radio network controller (SRNC) 112. A transport network is provided between SRNC 112 and RBS 114. SRNC 112, RBS 114, and the transport network in between, are thus part of a UMTS radio access network (UTRAN). It is to be noticed that the situation in Fig 1 has been kept on a general level in order not to obscure the disclosure in unnecessary detail. As is well known to the skilled person, there are other elements in a real 3G/UMTS system, not shown in Fig 1.

A conventional public switched telephone network (PSTN) 130 may be connected to the mobile telecommunications core network 110. Various telephone terminals, including a stationary telephone 131, may connect to the PSTN 130. The mobile telecommunications network 110 is also typically associated with a wide area data network 120, such as the Internet. Server computers 121 and client computers 122 may be connected to the wide area data network 120 and therefore allow packet-based data communication of data with the UE:s 100a-c.

It is also possible for a mobile terminal 100d to connect to the wide area data network 120 directly without going through the mobile telecommunications core network 110 and UMTS radio access network, for instance through a WiFi access point or an Internet bridge.

In the situation of Fig 1, data objects may be exchanged between the mobile terminals 100a, 100b, 100c and 100d using the mobile telecommunications core network 110 and UMTS radio access network, and/or the wide area data network 120, as intermediate communication infrastructure. However, there may also be situations where it is not desired or possible to use such intermediate communication infrastructure for exchanging data objects. For instance, a mobile terminal 100e may be out of reach of the UMTS radio access network or otherwise incapable of using the services thereof, or a mobile terminal 100f may lack an access point to the wide area data network 120.

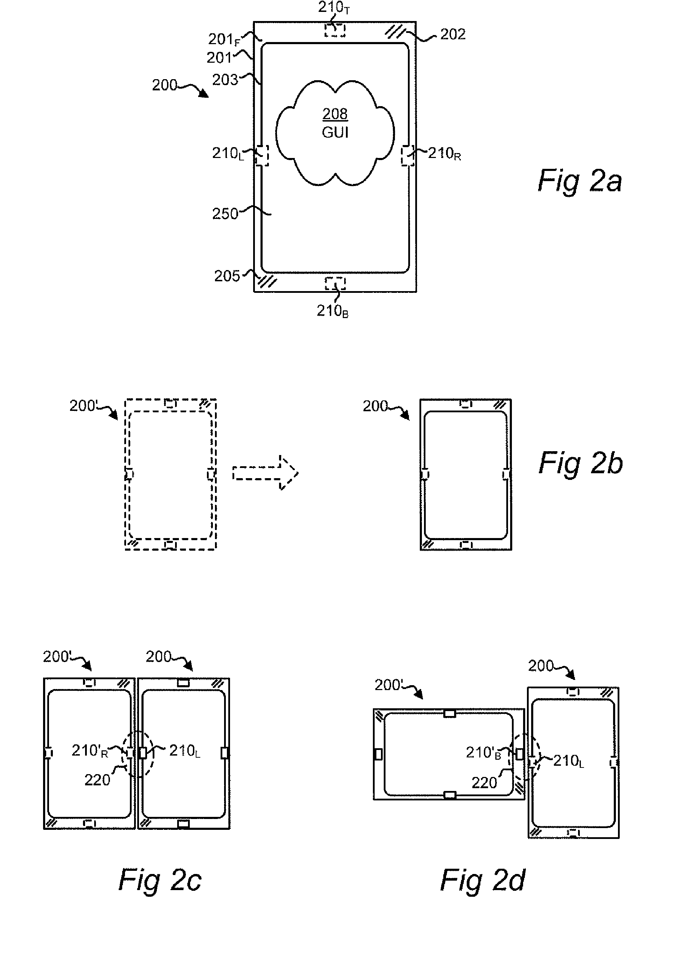

The inventive concept will now be schematically described with reference to Fig 2a - 2f. Fig 2a illustrates a portable electronic device 200, which may be - but is certainly not limited to - one of the mobile terminals 100a-f illustrated in Fig 1. The portable electronic device 200 has a housing 201 that includes a front side 201_{F}. The front side 201_{F} has a man-machine interface (MMI) that involves display means as well as input means for the user. In the disclosed embodiment, the display means and input means are jointly realized by a touch-sensitive display 203. A graphical user interface 208 is provided by the touch-sensitive display 203. Among other functions, the graphical user interface 208 supports drag-and-drop functionality, by means of which the user may drag a selected data object by actuating the display 203 with a finger or stylus to move the data object (or more specifically a graphical representation thereof, such as an icon) within the display area 250 of the display 203.

In this or other embodiments, the input means may also include e.g. a keypad with alpha-numeric keys and/or other keys such as arrow keys (navigation keys) and functional keys (soft keys), and/or a joystick, touch pad, rotator, jog dial, etc. Particularly when the device 200 is a mobile terminal, the MMI may also involve a speaker or earphone 202, and a microphone 205. Other well-known external components may also be provided, such as power switch, battery, charger interface, accessory interface, volume controls and external antenna, but are not indicated in Fig 2a for the sake of brevity.

The portable electronic device 200 also has one or more communication interfaces 210_{L}, 210_{R}, 210_{T}, 210_{B} for establishing a short-range communication channel with another portable electronic device 200'. In the disclosed embodiment, such communication interfaces are provided at the four edges of the display 203, wherein a first communication interface 210_{L} is provided at the left-hand side of the display 203, a second one (210_{R}) is at the right-hand side, a third one (210_{T}) is at the top, and a fourth one (210_{B}) is at the bottom of the display 203. The communication interfaces are implemented as NFC interfaces in the disclosed embodiment, having an ultra-short-range operating distance of the order of only 10 cm. Therefore, when the aforesaid another portable electronic device 200' (also referred to as the "receiving device" in the following) is remote from the portable electronic device 200 (the "sending device"), there will be no short-range communication channel between the devices. See Fig 2b.

On the other hand, when the sending device 200' is brought into the close vicinity 220 of the receiving device 200, a short-range NFC communication channel may be established between the devices. Since the plurality of NFC interfaces 210_{L}, 210_{R}, 210_{T}, 210_{B} are distributed around the edges of the display 203, the devices may be mutually connected in different spatial orientations. One example is seen in Fig 2c, where the right side of the sending device 200' is brought near the left side of the receiving device 200 and the communication channel is thus formed between the NFC interfaces 210'_{R} and 210_{L}. In effect, this creates a larger "virtual" work area for drag-and-drop functionality, extending over the combined display areas of the sending and receiving devices 200', 200.

Fig 2d shows another example, where instead the bottom side of the sending device 200' is brought near the left side of the receiving device 200 and the communication channel is instead formed between the NFC interfaces 210'_{B} and 210_{L}. It is evident that there are many more mutual spatial orientations in which the sending and receiving devices 200', 200 can be interconnected via pairs of their NFC interfaces to form larger, combined display areas. It is to be noticed in this regard that designing the display 203 to cover almost the entire front surface 201_{F} of the device 200 is particularly beneficial, since there will only be a minor gap to the display area of the other device 200' when brought together as, for instance, in Fig 2c or 2d.

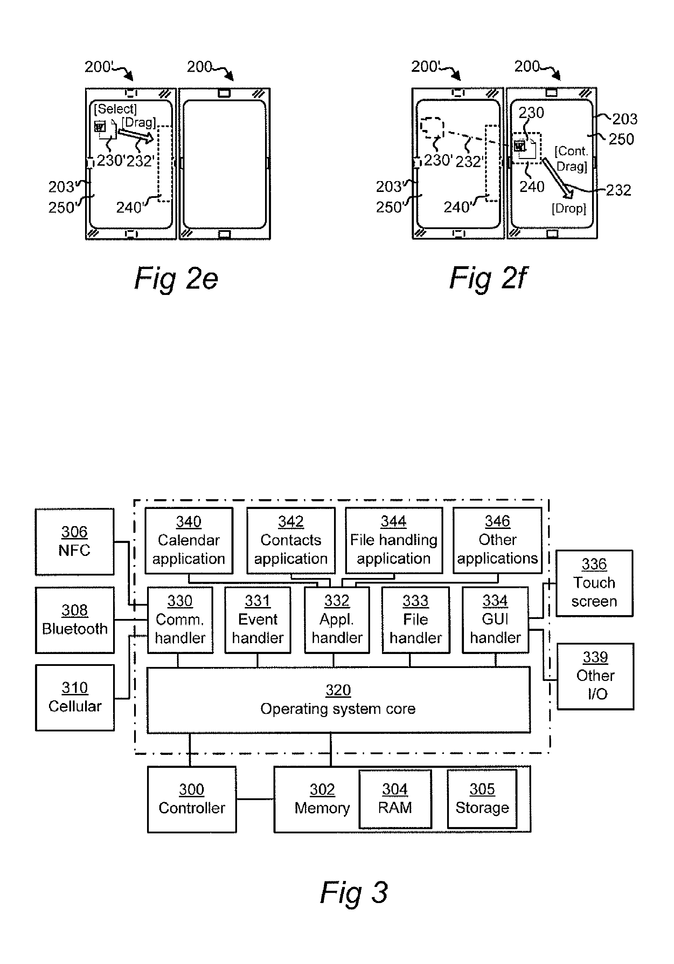

According to the inventive concept, once the sending and receiving devices 200', 200 have been brought together as described above, cooperative drag-and-drop functionality is provided, involving the display area 250' of the sending device 200' as well as the display area 250 of the receiving device 200. This can be seen in Figs 2e and 2f.

Fig 2e shows a situation where the sending device 200' and receiving device 200 have connected in an orientation like in Fig 2c. By actuating the touch-sensitive display 203' with his finger or a stylus, the user will initiate a drag-and-drop operation by selecting a graphical symbol 230' representing a desired data object in the graphical user interface of the sending device 200', and dragging it in a direction 232' over the display area 250'. When the drag action reaches a border region 240' (also called drag-and-drop handover region in the following) at the rightmost part of the display area 240' near the right-side NFC interface 210'_{R}, a drag-and-drop handover command is sent to the receiving device 200.

In response, the receiving device 200 creates a border - or drag-and-drop handover - region 240 at the leftmost part of the display area 240 near the left-side NFC interface 210_{L}. The graphical user interface 208 of the receiving device 200 then takes over the drag-and-drop operation initiated at the sending device 200' by showing a graphical symbol 230 representing the data object in the border region 240. The sending device 200' may then cease to present the graphical symbol 230', as seen in Fig 2f.

At the receiving device 200, the user may continue the drag-and-drop operation by actuating the touch-sensitive display 203 with his finger or stylus on the graphical symbol 230 in the border region 240 and then dragging it to a desired destination location within the display area 250, as indicated by arrow 232. It is to be noticed that this continued drag action 232 on the receiving device 200 is independent from the initial drag action 232' on the sending device 200' in the sense that the continued drag action 232 can be performed in any direction(s) at the choice of the user, not limited by the initial direction 232'.

When the desired destination location has been reached within the display area 250 of the receiving device 200, the user may drop the graphical symbol 230 by stop actuating the touch-sensitive display 203, conveniently by simply lifting his finger or stylus from the surface of the display 203. The result of the drop will typically depend on the situation.

If the subject of the drag-and-drop operation is a file object (i.e. if the data object represented by the graphical symbol 230' is a file object stored in the sending device), the drop action will trigger storage in the receiving device 200 of a copy of the file object, having been transferred from the sending device 200' to the receiving device 200. The copy of the file object may be transferred upon detected drop action, or alternatively at an earlier stage - for instance in or together with the drag-and-drop handover command from the sending device to the receiving device (particularly if the file object is of small or moderate byte size), or subsequently during the continued drag action on the receiving device. The received file object may be stored on a desktop space in the graphical user interface 208 of the receiving device 200, or, if a file handling application (cf 344 in Fig 3 below) has been activated in response to the continued drag action and subsequent drop action, at a destination location in the local file system of the receiving device, as determined by the drop location.

If the subject of the drag-and-drop operation instead is a set of data in the form of a sequence of text characters marked by the user at the sending device 200', or in the form of a "program-level" data object such as a figure in a drawing application or slideshow presentation application run on the sending device 200, the user may drop this set of data into an active end-user application at the receiving device 200 - for instance to copy a piece of text into a character receiving window, form or input field in a word processing, spreadsheet, calendar or contacts application (cf 340, 342, 346 in Fig 3).

It is to be noticed that the user who initiates the drag-and-drop operation at the sending device 200' may or may not be the same human being as the user who continues the handed over drag-and-drop operation at the receiving device 200.

The internal software and hardware structure of the receiving portable electronic device 200 according to the disclosed embodiment will now be described with reference to Fig 3. Software components are indicated within a dashed frame, whereas hardware components are outside of this frame. The device 200 has a controller 300 being in charge of the general device operation. Any commercially available central processing unit (CPU) or digital signal processor (DSP), or other programmable electronic logic device such as an application-specific integrated circuit (ASIC) or field-programmable gate array (FPGA), may be used to implement the controller 300. The controller 300 has associated memory 302 including a work memory (RAM) 304 and a storage memory 305 for instance in the form of EEPROM, flash memory (e.g. memory card), hard disk, or any combination thereof. The controller 300 uses the memory 302 for different purposes, e.g. for storing file objects as well as data and program instructions for various software in the device 200.

The software includes an operating system core 320 on a lower level, end-user applications 340-346 on an upper level, and drivers and handlers for the hardware and the end-user applications on an intermediate level. The intermediate level includes a GUI handler 334 which forms the graphical user interface 208 in cooperation with the touch screen 203 (indicated as 336 in Fig 3) and other I/O devices 339 (e.g. microphone 205, speaker 202, a vibrator, a ringtone generator, an LED indicator, audio volume controls, etc).

An application handler 332 controls the end-user applications 340-346, which may include a calendar application 340, a contacts application 342, a file handling application 344, as well as various other applications 346, such as applications for voice calls, video calls, messaging (e.g. SMS, MMS or email), a WAP/WWW browser, a control panel application, a camera application, one or more video games, a word processing application, a spreadsheet application, a drawing application, a slideshow presentation application, etc.

The software also includes various modules, protocol stacks, drivers, etc., which are commonly designated as communication handler 330 and which provide communication services for the NFC interfaces 210_{L}, 210_{R}, 210_{T}, 210_{B} (commonly designated as 306 in Fig 3), and optionally a Bluetooth interface 308 and a cellular interface 310. The cellular interface 310 comprises an internal or external antenna as well as appropriate radio circuitry for establishing and maintaining a wireless link to a base station (e.g. the link 116 and Node B 114 in FIG 1). The radio circuitry comprises a radio receiver and transmitter formed for instance by band pass filters, amplifiers, mixers, local oscillators, low pass filters, AD/DA converters, etc.

The intermediate level further includes an event handler 331 which receives, coordinates and forwards occurring events between the various hardware and software components, and a file handler 333 which allows the end-user applications 340-346 and GUI handler 334 to access the local file system in the storage memory 305.

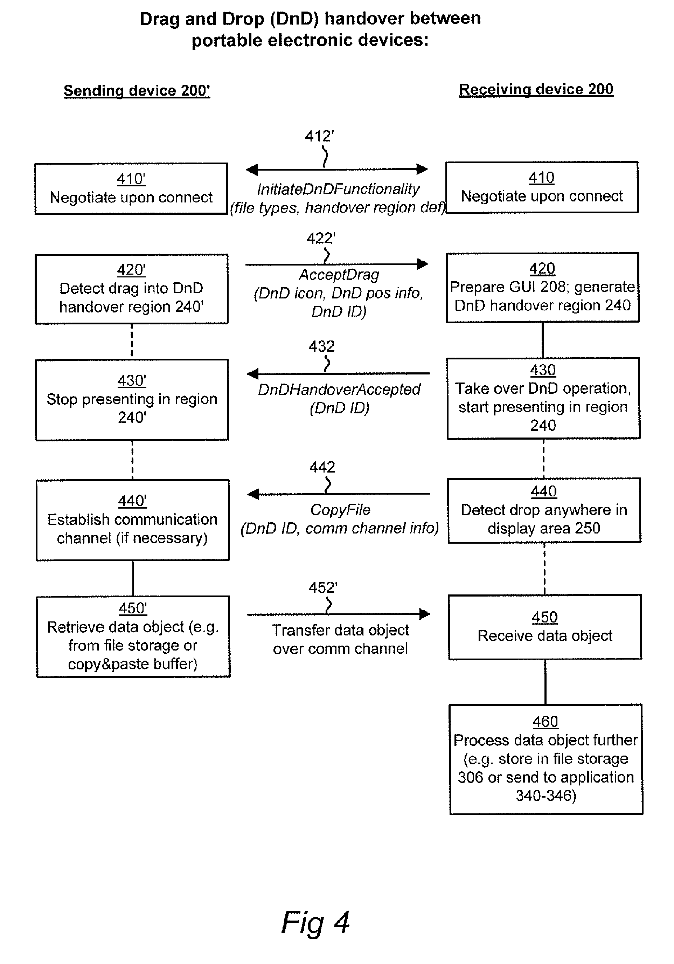

Fig 4 is a schematic flowchart diagram which describes in more detail how the drag-and-drop handover functionality described above with reference to Figs 2a-2f may be performed according to one embodiment. First, when the sending device 200' and the receiving device 200 are brought together like for instance in Fig 2c or 2d, NFC initiation procedures are performed to enable a communication channel between the two devices. More specifically, use is made of the P2P mode of the NFC specifications, which are available from the non-profit industry association called The Near Field Communication (NFC) Forum (web site http://www.nfc-forum.org, postal address 401 Edgewater Place, Suite 600, Wakefield, MA 01880, USA).

In conjunction with initiating the NFC communication channel, the devices 200, 200' perform negotiating steps 410' and 410 via an *InitiateDnDFunctionality* command 412' to decide upon particulars of the drag-and-drop handover functionality to be provided. Parameters that may be negotiated are for instance what file types to accept, and the sizes and locations of the drag-and-drop handover regions 240', 240. The drag-and-drop handover region 240' at the sending device 200' may conveniently be located at the side of the device where the involved NFC interface is located - e.g. NFC interface 210'_{R} in Fig 2c. The width of the region 240' is a matter of design and possibly user preference; the height may be such that the region 240' extends over a substantial part of the vertical extension of the display area 250' (as seen in Fig 2e), or alternatively such that it extends over essentially the entire vertical display extension. The drag-and-drop handover region 240 at the receiving device 200 may also be defined upon negotiation in step 410, or it may be postponed until a later stage 420 which is described below.

Upon completion of steps 410 and 410', the devices 200' and 200 are ready for drag-and-drop handover functionality. Subsequently, when the sending device in a step 420' detects a drag action into the drag-and-drop handover region 240', an *AcceptDrag* command 422' will be sent to the receiving device 200. A parameter of this command may be a graphical symbol *DnD icon* to be used for the continued drag-and-drop operation 232 at the receiving device. The *DnD icon* parameter may be given as a bitmap or as a reference to a library of predefined symbols in the graphical user interface 208. Advantageously, the same symbol is used at the receiving device as was used at the sending device (cf 230' and 230 in Figs 2e-2f).

Another parameter of the *AcceptDrag* command 422' may be positional information *DnD pos info* about the end location of the drag-and-drop operation 232' as it ended within the drag-and-drop handover region 240', as well as vector information thereof. This information may be used in a subsequent step 430.

Still another parameter of the *AcceptDrag* command 422' may be an identifier *DnD ID* of the drag-and-drop operation to be handed over.

At the receiving device 200, the *AcceptDrag* command 422' will be received in step 420. Using the parameter information in the *AcceptDrag* command 422', the operating system core 320 and GUI handler 334 - as controlled by the controller 300 - will prepare the graphical user interface 208 for the drag-and-drop operation to be taken over by generating the drag-and-drop handover region 240 (cf Fig 2f). The positional information *DnD pos info* may be used to determine the location within the display area 250 where the graphical symbol 230 (as defined by the *DnD icon* parameter) is to be first shown. Also, *DnD pos info* may be used to define the relative location of the region 240 within the display area 250, so that it matches an extrapolation of the initial drag-and-drop operation 232' made at the sending device 200'.

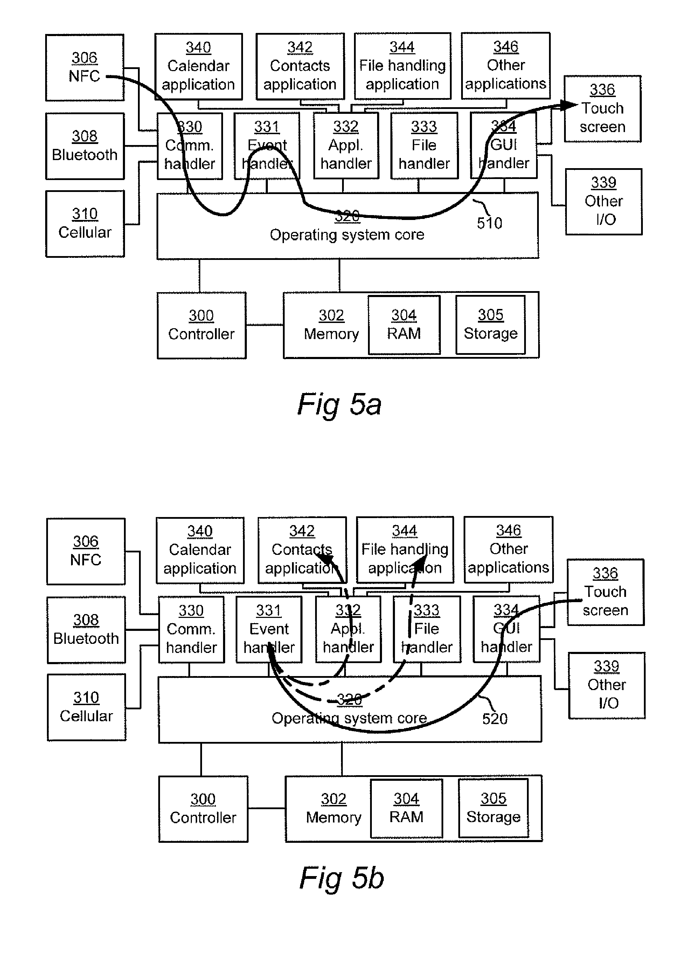

Fig 5a shows a chain of events 510 that occur within the hardware and software structure of the receiving device 200 during the above activity. As can be seen, the communication handler 330 receives the *AcceptDrag* command through the NFC interface 306 and generates an event to the event handler 331. In response, the event handler 331 generates an event to the GUI handler 334, and the GUI handler 334 will complete steps 420 and 430 by preparing the GUI 208 to take over the drag-and-drop operation as described above.

When step 430 has been completed, the graphical user interface 208 at the receiving device 200 has taken over the drag-and-drop operation, and a confirmation *DnDHandoverAccepted* 432 is sent back to the sending device 200', which in a step 430' then will stop presenting the graphical symbol 230' in region 240' of its display area 250'.

The user may now continue the handed over drag-and-drop operation 232 in the graphical user interface 208 of the receiving device 200, and move the graphical symbol 230 to a destination location at his choice, in the same manner as for a "normal" drag-and-drop operation having been initiated locally at the receiving device 200. When a drop action is detected in a subsequent step 440 by the GUI handler 334, an event is generated by the event handler to the destination of the drop action. As seen at 520 in Fig 5b, the destination may for instance be the file handler 333 (e.g. if the data object is a file object which is dropped onto the desktop of the GUI 208; the file handling application 344 (e.g. if the user has navigated into a file structure of expandable folders during the drag-and-drop operation); or another end-user application such as contacts application 342 (e.g. if the user has marked a sequence of text or a vCard object at the sending device 200' and wants to copy this data into the contacts application 342 at the receiving device 200).

The receiving device 200 remembers that this particular drag-and-drop operation 232 has been taken over from the sending device 200', and therefore generates a *CopyFile* command 442 which is sent to the sending device 200' over the NFC interface 306. Depending on implementation, the *CopyFile* command 442 may be generated by the aforementioned destination (e.g. 333, 344, 342), by the GUI handler 334, by the application handler 332 or by the event handler 331.

The *CopyFile* command 442 uses the aforementioned identifier *DnD ID* to inform the sending device about the drag-and-drop operation concerned, and therefore also the data object concerned. Thus, by way of the *CopyFile* command 442, the receiving device 200 will request the sending device 200' to retrieve (step 450') the data object which is the subject of the handed over drag-and-drop operation, and to transfer (452') this data object (or a copy thereof, since the original data typically remains in the sending device 200') to the receiving device 200.

The retrieval of the data object in step 450' may typically occur from a file storage memory if the data object is a file object, or from an edit buffer (copy&paste buffer) if the data object is a set of data like a marked text sequence or drawing object, etc.

The transfer 452' of the data object may occur over the NFC communication channel, i.e. the same channel as was used for the previous communications 412', 422', 432 and 442. As an alternative, however, the *CopyFile* command 442 may specify information *comm channel info* about an alternative communication channel to be used by the sending device 200' for the transfer 452' of the data object. This may be particularly advantageous if the data object is large (in terms of bytes), since such an alternative communication channel may provide a higher throughput and therefore a faster copying to the receiving device 200. In the disclosed embodiment, the alternative communication channel may be set up over Bluetooth (involving Bluetooth interface 308) or the mobile telecommunications network (involving cellular interface 310). An extra step 440' is performed at the sending device 200' to establish such an alternative communication channel if applicable.

In step 450, the receiving device 200 receives the requested data object as transferred at 452'. A final step 460 processes the data object further as appropriate. This may involve storing the data object in the storage memory 305 by the file handler 333 or file handling application 344, or forwarding the data object to a function for receiving e.g. text or program-level data objects (such as drawings objects or vCards) in one of the other end-user applications 340, 342, 346.

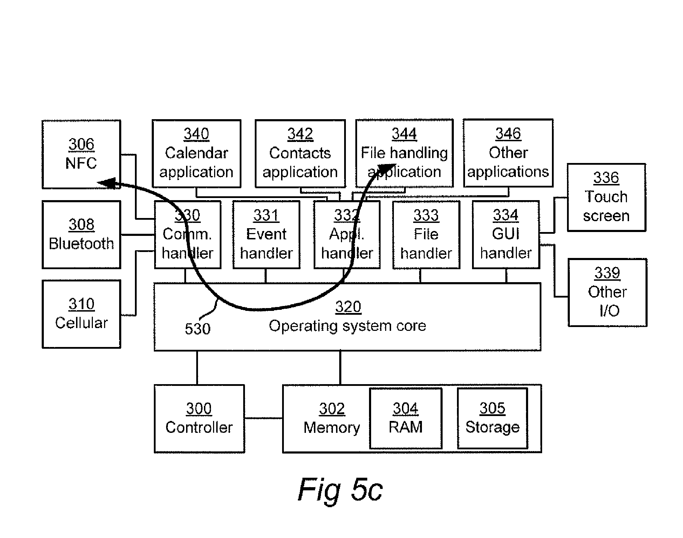

Fig 5c shows an exemplifying chain of events 530 for the functionality performed in the receiving device 200 at 442, 450 and 460 in Fig 4.

The invention has been described above in detail with reference to embodiments thereof. However, as is readily understood by those skilled in the art, other embodiments are equally possible within the scope of the present invention, as defined by the appended claims.

## Claims

1. A portable electronic device (200), comprising
a communication interface (210_{L, R, T, B}; 310) for establishing a short-range communication channel with another portable electronic device (200') located nearby;
a graphical user interface (208; 334) including display means (203; 336), input means (336), and drag-and-drop functionality for moving data objects in the graphical user interface; and
a controller (300) coupled to the communication interface and to the graphical user interface;
**characterized by**
the controller (300) being configured to receive a command (*AcceptDrag*) from said another portable electronic device (200') via the communication interface (210_{L, R, T, B}; 310), to identify the command as a drag-and-drop operation initiated (420') at said another device, and to control said graphical user interface (208; 334) to continue the drag-and-drop operation (230).

2. The portable electronic device as defined in claim 1, wherein the graphical user interface (208; 334) is configured to continue the drag-and-drop operation by
detecting a user's navigational actuation of the input means (336), and visually reproducing the navigational actuation in a display area (250) of the display means (203; 336) to represent the continued drag-and-drop operation (230).

3. The portable electronic device as defined in claim 2, wherein the graphical user interface (208; 334) is configured to begin the visual representation in a border region (240) of said display area (250) of said display means (203; 336).

4. The portable electronic device as defined in claim 3, wherein the border region (240) is at an edge of said display means (203) facing said another device (200').

5. The portable electronic device as defined in claim 4, wherein said communication interface (210_{L}) is located at said edge of said display means (203) facing said another device (200').

6. The portable electronic device as defined in claim 5, further comprising one or more additional short-range communication interfaces (210_{R, B, T}) at one or more other edges of the display means (203).

7. The portable electronic device as defined in any of claims 3-6, the controller (300) being configured to receive from said another device (200') positional information (*DnD pos info*) representing at least an end location of the drag-and-drop operation at said another device (200'), and to control said graphical user interface (208; 334) such that the location of said border region (240) within the display area (250) of said display means (203) depends on said positional information.

8. The portable electronic device as defined in any of claims 1-7, the controller (300) being configured to receive from said another device (200') image information *(DnD icon)* representing a graphical symbol (230') used for the drag-and-drop operation initiated at said another device (200'), and to control said graphical user interface (208; 334) to use the graphical symbol for the visual representation of the continued drag-and-drop operation (230).

9. The portable electronic device as defined in any of claims 1-8, further comprising a data object storage (305), said controller (300) being configured to detect (440) that the user stops actuating the input device (336), accept this as the drop action of the drag-and-drop operation, and control said data object storage to store a data object to which said drag-and-drop operation pertains.

10. The portable electronic device as defined in any of claims 1-9, further comprising an end-user application (340-346), said controller (300) being configured to detect (440) that the user stops actuating the input device (336), accept this as the drop action of the drag-and-drop operation, and forward to said end-user application a data object to which said drag-and-drop operation pertains.

11. The portable electronic device as defined in claim 9 or 10, wherein the controller (300) is configured, in response to having detected the drop action of the drag-and-drop operation, to send a request (*CopyFile*) for said data object to said another device (200') via said communication interface (210_{L}; 310), and to receive the requested data object from said another device.

12. The portable electronic device as defined in claim 11, configured to receive the requested data object from said another device over said communication interface (210_{L}; 310).

13. The portable electronic device as defined in claim 11, configured to receive the requested data object from said another device over another communication interface (308) than said communication interface (210_{L}; 310).

14. The portable electronic device as defined in claim 13, wherein said communication interface (210_{L}; 310) is an interface for Near Field Communication (NFC) or a galvanic interface, and wherein said another communication interface (308) is an interface for short-range supplemental data interchange, preferably Bluetooth™ or WiFi.

15. A method for communicating a data object between sending and receiving portable electronic devices (200', 200), both devices having graphical user interfaces including display means having respective display areas, the method involving:
detecting (420') a drag action of a drag-and-drop operation being performed in a border region (240') of the display area (250') of the sending device (200');
communicating (422') a command (*AcceptDrag*) over a short-range communication channel between the sending and receiving devices;
receiving (420) the command in the receiving device (200);
continuing (430) the drag-and-drop operation in the graphical user interface of the receiving device;
detecting (440) a drop action of the drag-and-drop operation being performed in the display area (250) of the receiving device;
transferring (452') a data object associated with the drag-and-drop operation from the sending device to the receiving device; and
receiving (450) the data object in the receiving device.

16. The method as defined in claim 15, wherein, prior to said detecting (420') of a drag action, said short-range communication channel is established between the sending and receiving devices (200', 200) and involves negotiation regarding one or more of the following:
file types acceptable for drag-and-drop operations between the devices,
the size and/or location of said border region (240') of the display area (250') of the sending device (200'), and
the size and/or location of a border region (240) of the display area (250) of the receiving device (200') to be used for said continuing (430) of the drag-and-drop operation.

17. The method as defined in claim 15 or 16,
wherein said communicating (422') of a command (*AcceptDrag*) over a short-range communication channel between the sending and receiving devices involves sending positional information (*DnD pos info*) representing at least an end location of the drag-and-drop operation at said sending device (200'), and
wherein said continuing (430) of the drag-and-drop operation in the graphical user interface of the receiving device is made dependent on said positional information.

18. The method as defined in any of claims 15-17,
wherein said communicating (422') of a command (0*cceptDrag*) over a short-range communication channel between the sending and receiving devices involves sending image information (*DnD icon*) representing a graphical symbol (230') used for the drag-and-drop operation at said sending device (200'), and
wherein said continuing (430) of the drag-and-drop operation in the graphical user interface of the receiving device uses said graphical symbol for the visual representation of the continued drag-and-drop operation (230).

19. The method as defined in any of claims 15-18,
wherein a request (*CopyFile*) for said data object is sent from said receiving device to said sending device upon said detecting (440) of said drop action, and
wherein receipt of said request at the sending device causes said transferring (452') of said data object from the sending device to the receiving device.

20. The method as defined in claim 19, further involving
sending, with said request (*CopyFile*) for said data object, communication channel information indicating a communication channel to be used for said transferring (452') of said data object from the sending device to the receiving device, wherein the indicated communication channel is selected from the group consisting of: said short-range communication channel, and another communication channel.
